(19) Europäisches Patentamt

European Patent Office

Office européen des brevets

(11) **EP 1 046 018 B1**

(12) **EUROPÄISCHE PATENTSCHRIFT**

(45) Veröffentlichungstag und Bekanntmachung des Hinweises auf die Patenterteilung:
**28.01.2004 Patentblatt 2004/05**

(21) Anmeldenummer: **98965566.7**

(22) Anmeldetag: **21.10.1998**

(51) Int Cl.⁷: $G01C\ 1/00$

(86) Internationale Anmeldenummer:
**PCT/DE1998/003078**

(87) Internationale Veröffentlichungsnummer:
**WO 1999/024787 (20.05.1999 Gazette 1999/20)**

(54) **NAVIGATIONSEINRICHTUNG FÜR KRAFTFAHRZEUGE**

NAVIGATION DEVICE FOR MOTOR VEHICLES

DISPOSITIF DE NAVIGATION POUR VEHICULE AUTOMOBILE

(84) Benannte Vertragsstaaten:
**DE FR GB IT**

(30) Priorität: **31.10.1997 DE 19748127**

(43) Veröffentlichungstag der Anmeldung:
**25.10.2000 Patentblatt 2000/43**

(73) Patentinhaber: **ROBERT BOSCH GMBH**
**70442 Stuttgart (DE)**

(72) Erfinder: **KREFT, Peter**
**D-30966 Hemmingen (DE)**

(56) Entgegenhaltungen:
**US-A- 4 758 959      US-A- 4 833 787**
**US-A- 4 920 655      US-A- 5 583 776**

**Beschreibung**

Die Erfindung betrifft eine Navigationseinrichtung für Kraftfahrzeuge, wobei neben anderen Ortsbestimmungsverfahren Koppelortung angewendet wird.

Navigationseinrichtungen für Kraftfahrzeuge benutzen häufig Satelliten-Ortungs-Systeme, wie beispielsweise GPS oder GLONASS, zur Bestimmung der jeweiligen Position und gegebenenfalls auch des Kurses und der Geschwindigkeit. Die beiden letztgenannten Größen können mit recht hoher Genauigkeit über den Dopplereffekt gewonnen werden. Durch eine künstliche Verschlechterung der Ortsauflösung beim GPS sowie durch zeitweise schlechte Empfangsbedingungen reichen die durch Satelliten-Ortung gewonnenen Informationen zu einer sicheren Orts-, Kurs- und Geschwindigkeits-Bestimmung und damit zu einer sicheren Zielführung nicht aus.

Der Stand der Technik wird zum Beispiel in den Dokumenten US-A-4 833 787 und US-A-5 583 776 beschrieben.

Bei bekannten Navigationseinrichtungen für Kraftfahrzeuge sind daher zusätzliche Sensoren, insbesondere ein Odometer (Wegmesser), eine Rückfahrkennung und ein Drehratensensor, vorgesehen. Die Rückfahrkennung (RFLS = Rückfahrlichtsignal) ermöglicht die Unterscheidung von Vorwärts- und Rückwärtsfahrt. Sie bestimmt das Vorzeichen der über das Odometer errechneten Fahrtstrecke. Für einen Wegmesser ist außer dem Wegmesser selbst ein erheblicher Aufwand zum Einbau des Wegmessers und der Verkabelung (Odometer, RFLS) mit der Navigationseinrichtung erforderlich, was insbesondere den nachträglichen Einbau von Navigationseinrichtungen verteuert.

Aufgabe der vorliegenden Erfindung ist es, eine Navigationseinrichtung anzugeben, welche auch ohne einen Wegmesser eine zuverlässige Ortsbestimmung und damit eine Zielführung ermöglicht.

Diese Aufgabe wird erfindungsgemäß dadurch gelöst, daß zur Wegmessung für die Koppelortung ein vorzugsweise in die Navigationseinrichtung eingebauter Beschleunigungssensor vorgesehen ist, dessen Ausgangssignal zweimal integriert wird.

Der bei der erfindungsgemäßen Navigationseinrichtung verwendete Beschleunigungssensor kann zusammen mit den anderen Komponenten der Navigationseinrichtung vom Hersteller in der Navigationseinrichtung selbst montiert werden, so daß keine Kabel verlegt werden müssen und auch keine separate Montage des Sensors innerhalb des Kraftfahrzeugs erforderlich ist.

Der Beschleunigungssensor wird so eingebaut, daß die Beschleunigung in Fahrzeuglängsachse meßbar wird. Zur Korrektur von Fehlmessungen bei Bergauf-/Bergabfahrten gemäß einer Weiterbildung kann vorgesehen sein, daß ferner ein Neigungssensor angeordnet ist, mit dessen Ausgangssignal das Ausgangssignal des Beschleunigungssensors korrigiert wird. Sensitive Achse des Neigungssensors ist hier die Fahrzeugquerachse. Durch Einsatz des Neigungssensors kann der Einfluß der Erdbeschleunigung g auf das Meßergebnis des Beschleunigungssensors rechnerisch eliminiert werden.

Auch bei dieser Weiterbildung können weitere Leitungen dadurch erspart werden, daß der Neigungssensor in der Navigationseinrichtung eingebaut ist. Dies hat außerdem den Vorteil, daß beim Einbau der Navigationseinrichtung der Neigungssensor ohne weitere Maßnahmen die gleiche Winkellage wie der ebenfalls in die Navigationseinrichtung eingebaute Beschleunigungssensor erhält.

Bei der erfindungsgemäßen Navigationseinrichtung kann vorgesehen sein, daß zur Kursbestimmung für die Koppelortung ein Drehratensensor vorgesehen ist. Ein solcher Drehratensensor kann ebenfalls in die Navigationseinrichtung integriert sein und erfordert deshalb keinen zusätzlichen Montageaufwand.

Wie bei jeder Art von Koppelortung ist auch bei der erfindungsgemäßen Navigationseinrichtung einerseits ein hinreichend genauer Anfangspunkt und andererseits ein Vergleich der durch die Koppelortung gewonnenen Positionen, insbesondere bei wiederholter Kopplung, mit anderweitig gewonnenen Positionen erforderlich. Bei einer Weiterbildung der erfindungsgemäßen Navigationseinrichtung kann dieses dadurch erfolgen, daß ferner ein Satelliten-Ortungs-Gerät vorgesehen ist, das die jeweilige Position und nach Dopplerverfahren die jeweilige Geschwindigkeit und den jeweiligen Kurs ermittelt, und daß die aus den Ausgangssignalen des Beschleunigungssensors und des Drehratensensors berechneten Größen mit den von dem Satelliten-Ortungs-Gerät ermittelten Größen von Zeit zu Zeit abgeglichen werden.

Dies kann insbesondere dadurch geschehen, daß zur Berechnung der Größen verwendete Parameter des Beschleunigungssensors, insbesondere ein Offset und ein Skalierungsfaktor, an entsprechende Parameter angeglichen werden, die aus den vom Satelliten-Ortungs-Gerät ermittelten Größen berechnet werden. Das Satelliten-Ortungs-Gerät benutzt beispielsweise das GPS (Global Positioning System) oder mit höherer Genauigkeit das Differential-GPS (DGPS).

Eine weitere Erhöhung der Genauigkeit ist bei einer anderen Weiterbildung dadurch möglich, daß Daten aus einer gespeicherten Straßenkarte auslesbar sind und daß Stützpunkte für die Koppelnavigation durch Abgleich der Ergebnisse der Koppelnavigation mit durch den Straßenverlauf gegebenen Positionen abgeleitet werden. Dabei ist vorzugsweise vorgesehen, daß die durch den Straßenverlauf gegebenen Positionen durch Drehraten erkannt werden. Letzteres ist im wesentlichen beim Abbiegen oder bei Straßenkrümmungen der Fall.

Bei einer anderen Weiterbildung der erfindungsgemäßen Navigationseinrichtung ist vorgesehen, daß eine durch die zweimalige Integration des Ausgangssignals des Beschleunigungssensors ermittelte Wegstrecke mit einer aus einer abgespeicherten Straßenkarte entnommenen Entfernung zwischen zwei Abbiegevorgängen abgeglichen wird. Hiermit ist ebenfalls eine Erhöhung der Genauigkeit der mit Hilfe des Beschleunigungssensors ermittelten Wegstrecke möglich.

Wegen der zweimaligen Integration des Ausgangssignals des Beschleunigungssensors machen sich Ungenauigkeiten in der Beschleunigungsmessung besonders störend bemerkbar. Bei einer anderen Weiterbildung ist daher vorgesehen, daß ein Stillstand des Kraftfahrzeugs durch Änderungen der Ausgangssignale des Beschleunigungssensors und des Drehratensensors, die jeweils unterhalb eines vorgegebenen Schwellwertes liegen, erkannt wird und daß bei Erkennen eines Stillstandes der Offset des Beschleunigungssensors justiert wird.

Eine vorteilhafte Ausgestaltung der erfindungsgemäßen Navigationseinrichtung besteht darin, daß an Eingänge eines Rechners Ausgänge des Drehratensensors, des Neigungssensors, des Beschleunigungssensors und des Satelliten-Ortungs-Gerätes angeschlossen sind, daß in dem Rechner Programme zur Koppelortung und zum Abgleich der mit Hilfe der Koppelortung gewonnenen Größen abgearbeitet werden und daß ein Ausgang des Rechners mit einer Ausgabeeinrichtung verbunden ist.

Ausführungsbeispiele der Erfindung sind in der Zeichnung anhand mehrerer Figuren dargestellt und in der nachfolgenden Beschreibung näher erläutert. Es zeigt:

Fig. 1      ein Blockschaltbild einer erfindungsgemäßen Navigationseinrichtung,

Fig. 2      eine Darstellung zur Erläuterung der Neigungskorrektur und

Fig. 3      eine Kennlinie eines Beschleunigungssensors.

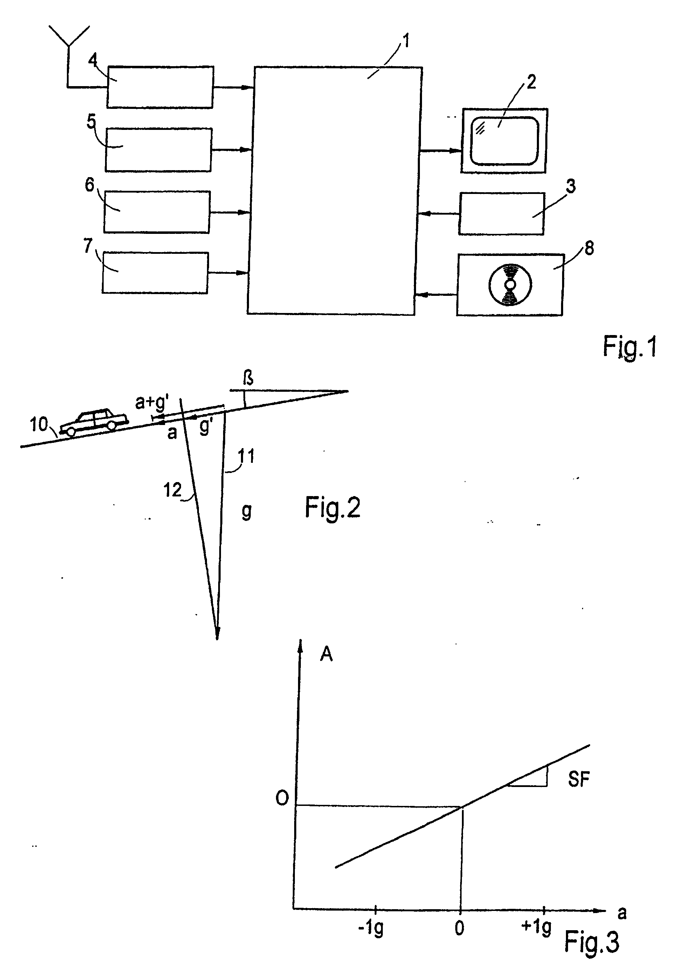

Die in Fig. 1 schematisch dargestellte Navigationseinrichtung umfaßt einen Rechner 1, der mit einer Ausgabeeinrichtung in Form eines Displays 2 verbunden ist. Ferner ist an den Rechner 1 eine Eingabeeinrichtung in Form einer Tastatur 3 angeschlossen. Der Rechner 1 erhält von einem Satelliten-Ortungs-Gerät 4 - im folgenden GPS-Empfänger genannt - die Position, die Geschwindigkeit und den Kurs. Die Geschwindigkeit und der Kurs werden im folgenden Doppler-Geschwindigkeit und Doppler-Kurs genannt, um sie von den mit Hilfe der Sensoren ermittelten Größen zu unterscheiden.

Der Rechner erhält ferner von einem Drehratensensor 5, einem Beschleunigungssensor 6 und einem Neigungssensor 7 die jeweilige Drehrate (Kursänderung), die Beschleunigung und die Neigung des Kraftfahrzeugs. Schließlich ist der Rechner 1 noch mit einem Speicher 8 verbunden, beispielsweise mit einem CD-ROM, zur Speicherung einer Straßenkarte.

Durch Integration des Signals des Beschleunigungssensors wird die Geschwindigkeit berechnet:

$$v = \int a \cdot dt.$$

Die Geschwindigkeit kann durch entsprechende Abtastraten (Zeitintervall $\delta t$) der Beschleunigungsmessung berechnet werden:

$$v = a_1 \cdot \delta t + a_2 \cdot \delta t + a_3 \delta t + ... + a_n \delta t + v_0$$

Durch weitere Integration der Geschwindigkeit wird der zurückgelegte Weg s berechnet. In der Praxis erhält man bei entsprechender Abtastung des Beschleunigungssignals den Wert s nach folgender Gleichung:

$$s = v_1 \cdot \delta t + v_2 \cdot \delta t + v_3 \delta t + ... + v_n \delta t + s_0$$

Störende Einflüsse durch Neigung des Fahrzeugs um die Fahrzeugquerachse bzw. durch die Erdbeschleunigung können in der Beschleunigungsmessung durch einen Neigungssensor rechnerisch ausgeglichen werden, was im folgenden unter Bezugnahme auf Fig. 2 erläutert wird. Dabei ist mit 10 eine mit einem Neigungswinkel $\beta$ abfallende Fahrbahn, mit 11 die Richtung der Erdbeschleunigung g und mit 12 eine Senkrechte zur Fahrbahn bezeichnet.

Durch Neigung des Fahrzeugs bzw. des Beschleunigungssensors wird eine Teilkomponente g' der Erdbeschleunigung g mitgemessen. Um nun die tatsächliche Fahrzeugbeschleunigung a zu erhalten, wird mit Hilfe des Neigungssensors die Neigung $\beta$ bestimmt. Somit errechnet sich die wahre Fahrzeugbeschleunigung a aus der gemessenen Fahrzeugbeschleunigung $a_m$ zu:

$$a = a_m - g \cdot \sin \beta \text{ mit } a_m = a + g'$$

Der Zusammenhang zwischen der Beschleunigung und dem Ausgangssignal eines Beschleunigungssensors wird durch zwei wesentliche Parameter beschrieben, dem Scalefactor SF und dem Offset O. Diese beiden Parameter unterliegen in definierten Grenzen Exemplarstreuungen und äußeren Einflüssen, wie z.B. der Temperatur.

Der Offset beschreibt die Ausgangsgröße A des Beschleunigungssensors bei einer Beschleunigung von 0 g und der SF beschreibt die Empfindlichkeit des Sensors und damit die Änderung des Ausgangssignals in Abhängigkeit von der Änderung des Eingangssignals a. Diese beiden Parameter müssen mit ausreichender Genauigkeit dem Navigationssystem bekannt sein, um eine Navigation durchführen zu können.

Ein Stillstand stellt eine konstante Beschleunigung (0g) dar, und deshalb muß die Streuung der Ausgangssignale des Beschleunigungssensors in diesem Fall gering sein. Das gleiche gilt für das Ausgangssignal des Drehratensensors, da die Drehrate 0°/s beträgt. Wird ein Stillstand des Fahrzeugs erkannt, so kann der Offset des Beschleunigungssensors exakt ermittelt werden.

Während des Fahrtverlaufs sind zudem verschiedene Adaptionen der Parameter des Beschleunigungssensors möglich. So kann bei exakt bekanntem Offset (z.3. nach Standphase) oder bei vernachlässigbarem Fehler gegenüber der tatsächlichen Beschleunigung a die Beschleunigung auch über die Doppler-Geschwindigkeit bestimmt werden:

$$\delta v_{Doppler} = v_{Doppler2} - v_{Doppler1}$$

Aus der über den Beschleunigungssensor gemessenen Geschwindigkeitszunahme $\delta v_a$ kann der relative Fehler des $S_F$ aus $F_{SF} = (\delta v_a - \delta v_{Doppler})/\delta v_{Doppler}$ ermittelt werden.

Stehen DGPS-Positionsdaten zur Verfügung, kann zudem aus

$$\delta s_{GPS} = [(x_{GPS2}-x_{GPS1})^2+(y_{GPS2}-y_{GPS1})^2]^{\frac{1}{2}}$$

und der Zeit $\delta t_{21}$ des Beschleunigungs- oder Meßzeitraums eine weitere Berechnung der Beschleunigung erfolgen:

$$\delta s_{GPS} = \frac{1}{2}a_{GPS} \cdot (\delta t_{21})^2 + v_1 \cdot \delta t_{21},$$

$$a_{GPS} = 2 \cdot (\delta s_{GPS}-v_1 \cdot \delta t_{21})/(\delta t_{21})^2$$

$v_1$ die Geschwindigkeit zum Zeitpunkt $t_1$ (Beginn des Meßintervalls) muß hier bekannt sein. Sie kann beispielsweise durch eine Standphase exakt bekannt sein oder über eine Doppler-Geschwindigkeit ausreichend bekannt sein. Die "GPS-Beschleunigung" $a_{GPS}$ dient dann als Referenz der Adaption des SF des Beschleunigungssensors.

Ist der SF bekannt oder werden nur geringe oder keine Beschleunigungen durchgeführt, so kann der Offset über Doppler-Geschwindigkeiten bestimmt werden. Über

$$\delta v_{Doppler} = v_{Doppler2} - v_{Doppler1}$$

kann im Zeitraum $\delta t_{21} = t_2 - t_1$ die Beschleunigung

$$a_{Doppler} = \delta v_{Doppler}/\delta t_{21}$$

ermittelt werden. Durch Vergleich mit der Beschleunigung des Beschleunigungssensors kann eine fehlerhafte Annahme des Offsets im Navigationssystems korrigiert werden.

Stehen DGPS-Positionsdaten zur Verfügung, so kann über das $\delta s_{GPS}$ aus $\delta s_a$ (Beschleunigungssensor) der Wegfehler $s_{Fehler} = \delta s_a - \delta s_{GPS}$ berechnet werden. Über die Gleichung

$$s_{Fehler} = \frac{1}{2} \cdot a_{Fehler} \cdot (\delta t_{21})^2$$

kann der Offset-Fehler aus

$$a_{Fehler} = 2 \cdot s_{Fehler}/(\delta t_{21})^2$$

bestimmt werden. Dieses Verfahren kann auch auf das Map Matching projiziert werden. Beim Map Matching wird die Referenz-Strecke statt über DGPS über zwei Map-Positionen bestimmt, die durch Abbiegevorgänge eindeutig zu ermitteln sind. Voraussetzung für eine nebeneffektfreie Messung ist hier ein ausreichend bekannter SF.

Jede Referenzmessung der Beschleunigung über GPS-Doppler-Geschwindigkeiten, DGPS-Positionen und das Map Matching ist fehlerbehaftet. Somit sind in der Praxis die Parameter des Beschleunigungssensors nur durch wiederholte Messungen mit ausreichender Genauigkeit bestimmbar. In welchem Maße die Parameter des Beschleunigungssensors (Offset und SF) aufgrund von Messungen korrigiert oder adaptiert werden, hängt von verschiedenen Parametern ab.

Einfluß auf die Adaptionsgeschwindigkeit können haben

- der GPS-GDOP (Geometric Dilution of Precision), der die GPS-Zeitfehler und die Satellitengeometrie berücksichtigt,
- die absolute Geschwindigkeit der Doppler-Messungen (mit zunehmender Geschwindigkeit sinkt der relative Fehler),
- das Alter der DGPS-Korrekturdaten und damit das Vertrauen in die Korrekturwerte,
- die Notwendigkeit der Parameteradaption. Sind die Parameter nach eigener Schätzung ausreichend bekannt, genügt in der Regel eine langsame Parameteradaption.

Auswirkungen der verbleibenden Fehler des Beschleunigungssensors werden über das Map Matching ausgeglichen (Positionsfehler). Fehler in der Geschwindigkeitsberechnung und daraus resultierende Wegfehler können über die Doppler-Messung eliminiert werden. Zusätzlich können schon geringe Positionsfehler über das DGPS eliminiert werden.

**Patentansprüche**

1. Verfahren zur Navigation für Kraftfahrzeuge, wobei neben anderen Ortsbestimmungsverfahren Koppelortung angewendet wird, **dadurch gekennzeichnet, daß** zur Wegmessung für die Koppelortung ein vorzugsweise in die Navigationseinrichtung eingebauter Beschleunigungssensor verwendet wird, dessen Ausgangssignal zweimal integriert wird, und daß mit einem Ausgangssignal eines Neigungssensors das Ausgangssignal des Beschleunigungssensors korrigiert wird.

2. Verfahren zur Navigation nach Anspruch 1, dadurch gekenn- . zeichnet, daß ein Kurs für die Koppelortung mit einem Drehratensensor bestimmt wird.

3. Verfahren nach einem der vorhergehenden Ansprüche, **dadurch gekennzeichnet, daß** mit einem Satellitenortungsgerät eine jeweilige Position und nach Dopplerverfahren eine jeweilige Geschwindigkeit und ein jeweiliger Kurs ermittelt werden, und daß die aus den Ausgangssignalen des Beschleunigungssensors und des Drehratensensors berechneten Größen mit den von dem Satellitenortungsgerät ermittelten Größen von Zeit zu Zeit abgeglichen werden.

4. Verfahren zur Navigation nach Anspruch 3, **dadurch gekennzeichnet, daß** zur Berechnung der Größen verwendete Parameter des Beschleunigungssensors, insbesondere ein Offset und ein Skalierungsfaktor, an entsprechende Parameter angeglichen werden, die aus den von dem Satellitenortungsgerät ermittelten Größen berechnet werden.

5. Verfahren zur Navigation nach Anspruch 4, **dadurch gekennzeichnet, daß** eine jeweilige Position nach dem DGBS-Verfahren ermittelt wird.

6. Verfahren zur Navigation nach einem der vorhergehenden Ansprüche, **dadurch gekennzeichnet, daß** Daten aus einer gespeicherten Straßenkarte ausgelesen werden und das Stützpunkte für die Koppelnavigation durch Abgleich der Ergebnisse der Koppelnavigation mit durch den Straßenverlauf gegebenen Positionen abgeleitet werden.

7. Verfahren zur Navigation nach Anspruch 6, **dadurch gekennzeichnet, daß** die durch den Straßenverlauf gegebenen Positionen durch Drehraten insbesondere beim Abbiegen oder bei Straßenkrümmungen erkannt werden.

8. Verfahren zur Navigation nach einem der vorhergehenden Ansprüche, **dadurch gekennzeichnet, daß** eine durch die zweimalige Integration des Ausgangssignals des Beschleunigungssensors ermittelte Wegstrecke mit einer aus einer .abgespeicherten Straßenkarte entnommenen Entfernung zwischen zwei Abbiegevorgängen abgeglichen wird.

9. Verfahren zur Navigation nach einem der vorhergehenden Ansprüche, **dadurch gekennzeichnet, daß** ein Stillstand des Kraftfahrzeug durch das Streumaß der Ausgangssignale des Beschleunigungssensors und des Drehratensensors, die jeweils unterhalb eines vorgegebenen Schwellenwertes liegen, erkannt wird und daß bei Erkennen eines Stillstandes der Offset des Beschleunigungssensors justiert wird.

10. Navigationseinrichtung für Kraftfahrzeuge, bei der neben anderen Ortsbestimmungsverfahren Koppelortung anwendbar ist, **dadurch gekennzeichnet, daß** zur Wegmessung für die Koppelortung ein vorzugsweise in die Navigationseinrichtung eingebauter Beschleunigungssensor vorgesehen ist, dessen Ausgangssignal zweimal integrierbar ist, und daß ein Neigungssensor vorgesehen ist, mit dessen Ausgangssignal das Ausgangssignal des Beschleunigungssensors korrigierbar ist.

11. Navigationseinrichtung nach Anspruch 10, **dadurch gekennzeichnet, daß** der Neigungssensor in der Navigationseinrichtung eingebaut ist.

12. Navigationseinrichtung nach einem der Ansprüche 10 bis 11, **dadurch gekennzeichnet, daß** zur Kursbestimmung für die Koppelortung ein Drehratensensor vorgesehen ist.

13. Navigationseinrichtung nach einem der Ansprüche 10 bis 12, **dadurch gekennzeichnet, daß** ferner ein Satellitenortungsgerät vorgesehen ist, durch das die jeweilige Position und nach Dopplerverfahren die jeweilige Geschwindigkeit und der jeweilige Kurs ermittelbar ist.

14. Navigationseinrichtung nach einem der Ansprüche 10 bis 13, **dadurch gekennzeichnet, daß** Daten aus einer gespeicherten Straßenkarte auslesbar sind und daß Stützpunkte für die Koppelnavigation durch Abgleich der Ergebnisse der Koppelnavigation mit durch den Straßenverlauf gegebenen Positionen ableitbar sind.

15. Navigationseinrichtung nach einem der Ansprüche 10 bis 14, **dadurch gekennzeichnet, daß** an Eingänge eines Rechners Ausgänge des Drehratensensors, des Neigungssensors, des Beschleunigungssensors und des Satellitenortungsgerätes angeschlossen sind, daß in dem Rechner Programme zur Koppelortung und zum Abgleich der mit Hilfe der Koppelortung gewonnenen Größe abarbeitbar sind und daß ein Ausgang des Rechners mit einer Ausgabeeinrichtung verbunden ist.

**Claims**

1. Navigation method for motor vehicles, in which compound navigation is applied in addition to other location-determining methods, **characterized in that**, for the purpose of distance measurement for the compound navigation, an acceleration sensor which is preferably integrated into the navigation device is used, the output signal of which acceleration sensor is integrated twice, and **in that** the output signal of the acceleration sensor is corrected using an output signal of an inclination sensor.

2. Navigation method according to Claim 1, **characterized in that** a course for the compound navigation is determined using a rotational speed sensor.

3. Method according to one of the preceding claims, **characterized in that** a respective position is determined using a satellite-locating device, and a respective speed and a respective course are determined using a Doppler method, and **in that** the variables which are calculated from the output signals of the acceleration sensor and of the rotational speed sensor are reconciled from time to time with the variables determined by the satellite-locating device.

4. Navigation method according to Claim 3, **characterized in that** parameters of the acceleration sensor, in particular an offset and a scaling factor, which are used to calculate the variables are reconciled with corresponding parameters which are calculated from the variables which are determined by the satellite-locating device.

5. Navigation method according to Claim 4, **characterized in that** a respective position is determined according to the DGBS method.

6. Navigation method according to one of the preceding claims, **characterized in that** data are read out of a stored road map, and **in that** reference points for the compound navigation are derived by reconciling the results of the compound navigation with positions given by the course of the road.

7. Navigation method according to Claim 6, **characterized in that** the positions which are given by the course of the road are detected by means of rotational speeds, in particular when turning or on bends in the road.

8. Navigation method according to one of the preceding claims, **characterized in that** a route which is determined by integrating the output signal of the acceleration sensor twice is reconciled with a distance between two turning manoeuvres which is obtained from a stored road map.

9. Navigation method according to one of the preceding claims, **characterized in that** a stationary state of the motor vehicle is detected by means of the degree of scattering of the output signals of the acceleration sensor and of the rotational speed sensor which each lie below a predefined threshold value, and **in that** the offset of the acceleration sensor is adjusted when a stationary state is detected.

10. Navigation device for motor vehicles, in which compound navigation can be applied in addition to other location-determining methods, **characterized in that**, for the purpose of distance measurement for the compound navigation, an acceleration sensor which is preferably integrated into the navigation device is provided, the output signal of which acceleration sensor can be integrated twice, and **in that** an inclination sensor is provided, whose output signal can be used to correct the output signal of the acceleration sensor.

11. Navigation device according to Claim 10, **characterized in that** the inclination sensor is integrated in the navigation device.

12. Navigation device according to one of Claims 10 to 11, **characterized in that** a rotational speed sensor is provided for determining the course for the compound navigation.

13. Navigation device according to one of Claims 10 to 12, **characterized in that** in addition a satellite-locating device is provided by means of which the respective position can be determined, and the respective speed and the respective course can be determined by means of a Doppler method.

14. Navigation device according to one of Claims 10 to 13, **characterized in that** data can be read out of a stored road map, and **in that** reference points for the compound navigation can be derived by reconciling the results of the compound navigation with positions given by the course of the road.

15. Navigation device according to one of Claims 10 to 14, **characterized in that** outputs of the rotational speed sensor, of the inclination sensor, of the acceleration sensor and of the satellite-locating device are connected to inputs of a computer, **in that** programs for compound navigation and for reconciling the variable acquired using the compound navigation can be processed in the computer, and **in that** an output of the computer is connected to an output device.

**Revendications**

1. Procédé de navigation pour véhicule, dans lequel on emploie la navigation à l'estime en plus d'autres procédés de localisation, **caractérisé en ce qu'** on utilise, de préférence intégré au dispositif de navigation pour mesurer le déplacement dans le cadre de la navigation à l'estime, un accéléromètre dont le signal de sortie est intégré deux fois, et le signal de sortie de l'accéléromètre est corrigé au moyen d'un signal de sortie d'un capteur d'inclinaison.

2. Procédé de navigation selon la revendication 1, **caractérisé en ce qu'** un cap est déterminé au moyen d'un capteur de rotation dans le cadre de la navigation à l'estime.

3. Procédé selon l'une des revendications précédentes, **caractérisé en ce qu'** une certaine position est déterminée au moyen d'un appareil de localisation par satellite, la vitesse et le cap de moment sont déterminés par procédé Doppler, et les valeurs calculées à partir des signaux de sortie de l'accéléromètre et de capteur de rotation sont de temps en temps comparées avec les valeurs déterminées par l'appareil de localisation par satellite.

4. Procédé de navigation selon la revendication 3, **caractérisé en ce que** pour calculer les valeurs, on compare des paramètres utiles de l'accéléromètre, notamment un écart et un facteur d'échelle, avec les paramètres correspondants calculés à partir des valeurs déterminées par l'appareil de localisation par satellite.

5. Procédé de navigation selon la revendication 4, **caractérisé en ce que** une certaine position est déterminée suivant le procédé DGPS.

6. Procédé de navigation selon l'une des revendications précédentes, **caractérisé en ce que** des données issues d'une carte routière mise en mémoire sont extraites et des points de contrôle, dans le cadre de la navigation à l'estime, sont dérivés par comparaison entre les résultats de navigation à l'estime et les positions données au fur et à mesure du parcours routier.

7. Procédé de navigation selon la revendication 6, **caractérisé en ce que** les positions données au fur et à mesure du parcours routier sont reconnues par le biais du taux de rotation, notamment lors des prises de virages ou en fonction des courbures de la route.

8. Procédé de navigation selon l'une des revendications précédentes, **caractérisé en ce qu'** un itinéraire déterminé par la double intégration du signal de sortie de l'accéléromètre est comparé avec une distance extraite de la carte routière mise en mémoire entre deux processus de prise de virage.

9. Procédé de navigation selon l'une des revendications précédentes, **caractérisé en ce qu'** un arrêt du véhicule est reconnu par le biais de la mesure de dispersion des signaux de sortie de l'accéléromètre et du capteur de rotation qui se situent chacun en dessous d'un seuil prédéterminé, et l'écart de l'accéléromètre est ajusté lors de la reconnaissance de cet arrêt.

10. Dispositif de navigation pour véhicule, dans lequel on peut employer la navigation à l'estime en sus d'autres procédés de localisation, **caractérisé en ce qu'** un accéléromètre de préférence intégré au dispositif de navigation est prévu pour mesurer le déplacement dans le cadre de la navigation à l'estime, et son signal de sortie peut être intégré deux fois, et on prévoit un capteur d'inclinaison dont le signal de sortie permet de corriger le signal de sortie de l'accéléromètre.

11. Dispositif de navigation selon la revendication 10, **caractérisé en ce que** le capteur d'inclinaison est intégré dans le dispositif de navigation.

12. Dispositif de navigation selon l'une des revendications 10 ou 11, **caractérisé en ce qu'** un capteur de rotation est prévu pour déterminer le cap dans le cadre de la navigation à l'estime.

13. Dispositif de navigation selon l'une des revendications 10 à 12, **caractérisé en ce qu'** il est en outre prévu un appareil de localisation par satellite permettant de déterminer la position du moment, la vitesse et le cap du moment étant déterminés par procédé Doppler.

**14.** Dispositif de navigation selon l'une des revendications 10 à 13, **caractérisé en ce que**
des données sont extraites d'une carte routière mise en mémoire et **en ce que** des points de contrôle, dans le cadre de la navigation à l'estime, peuvent être dérivés par comparaison entre les résultats de navigation à l'estime et les positions données au fur et à mesure du parcours routier.

**15.** Dispositif de navigation selon l'une des revendications 10 à 14,
**caractérisé en ce que**
les sorties du capteur de rotation, du capteur d'inclinaison, de l'accéléromètre et de l'appareil de localisation par satellite sont connectées aux entrées d'un ordinateur, en des programmes de l'ordinateur destinés à la navigation à l'estime et à la comparaison des valeurs obtenues à l'aide de la navigation à l'estime peuvent être exécutés et une sortie de l'ordinateur est connectée à un dispositif d'affichage.

Fig.1

Fig.2

Fig.3